# EUROPÄISCHE PATENTSCHRIFT

(11) **EP 3 500 739 B1**
(45) Veröffentlichungstag und Bekanntmachung des Hinweises auf die Patenterteilung: **04.03.2020**
(21) Anmeldenummer: 16760649.0
(22) Anmeldetag: 22.08.2016
(51) Int. Cl.: F01N 3/20, F01N 13/08, F01N 3/28

(54) **ABGASNACHBEHANDLUNGSEINRICHTUNG FÜR EINE VERBRENNUNGSKRAFTMASCHINE EINES KRAFTWAGENS**
EXHAUST GAS AFTERTREATMENT DEVICE FOR AN INTERNAL COMBUSTION ENGINE OF A MOTOR VEHICLE
SYSTÈME DE POST-TRAITEMENT DES GAZ D'ÉCHAPPEMENT DESTINÉ À UN MOTEUR À COMBUSTION INTERNE D'UN VÉHICULE AUTOMOBILE

(43) Veröffentlichungstag der Anmeldung: 26.06.2019
(73) Patentinhaber: Daimler AG, 70372 Stuttgart (DE)
(72) Erfinder: BOLDT, Thomas, 89231 Neu-Ulm (DE); GERHARD, Johannes, 73730 Esslingen (DE); HERMAN, Thomas, 71332 Waiblingen (DE); HOCHHOLZNER, Michael, 73760 Nellingen (DE); KONTIN, Sinisa, 70327 Stuttgart (DE); OESTREICH, Tilmann, 70825 Korntal-Münchingen (DE); PETRY, Andreas, 71563 Affalterbach (DE); ROUTIER, Emmanuel, 70190 Stuttgart (DE); STUTE, Benedikt, 71296 Heimsheim (DE)
(74) Vertreter: JENSEN & SON
(86) Internationale Anmeldenummer: PCT/EP2016/001415
(87) Internationale Veröffentlichungsnummer: WO 2018/036600

(56) Entgegenhaltungen:
- EP-A1- 2 884 069
- WO-A1-2012/047159

## Beschreibung

Die Erfindung betrifft eine Abgasnachbehandlungseinrichtung für eine Verbrennungskraftmaschine eines Kraftwagens gemäß dem Oberbegriff von Patentanspruch 1.

Die WO 2012/047159 A1 offenbart eine solche Abgasnachbehandlungseinrichtung mit einem von Abgas durchströmbaren Abgasführungselement und mit einer Dosiereinrichtung, mittels welcher in das Abgasführungselement ein Reduktionsmittel einbringbar ist.

Weiter ist eine Abgasnachbehandlungseinrichtung für eine Verbrennungskraftmaschine eines Kraftwagens bereits in der US 2010/0005791 A1 offenbart. Die Abgasnachbehandlungseinrichtung umfasst wenigstens ein Abgasführungselement, welches zumindest einen von Abgas der Verbrennungskraftmaschine durchströmbaren Abgaskanal aufweist. Das Abgasführungselement dient somit zum Führen des Abgases.

Ferner umfasst die Abgasnachbehandlungseinrichtung eine Dosiereinrichtung, mittels welcher an wenigstens einer Zuführstelle ein Reduktionsmittel zum Entsticken des Abgases in den Abgaskanal einbringbar ist. Ferner ist ein in dem Abgaskanal angeordnetes Strömungsteilungselement vorgesehen, mittels welchem der Abgaskanal in einen ersten Teilkanal und einen zweiten Teilkanal unterteilt ist.

Der erste Teilkanal ist von einer ersten Teilströmung des Abgases durchströmbar, wobei der zweite Teilkanal von einer zweiten Teilströmung des Abgases durchströmbar ist. Mit anderen Worten wird das Abgas beziehungsweise eine Gesamtströmung des Abgases mittels des Strömungsteilungselements in die erste Teilströmung und die zweite Teilströmung aufgeteilt, wobei die erste Teilströmung den korrespondierenden ersten Teilkanal und die zweite Teilströmung den korrespondierenden zweiten Teilkanal durchströmt. Das Strömungsteilungselement weist dabei einen von der zweiten Teilströmung durchströmbaren und sich in Strömungsrichtung der zweiten Teilströmung erweiternden Kanalbereich auf, sodass das Strömungsteilungselement zumindest in dem Teilbereich als Konus ausgebildet ist.

Ferner offenbart die DE 10 2009 053 950 A1 eine Vorrichtung zur Nachbehandlung von Abgasen in einer Abgasanlage von Brennkraftmaschinen. Auch hierbei ist eine Dosiereinrichtung zur Zuführung von Reduktionsmittel vorgesehen.

Das Reduktionsmittel dient zum Entsticken des Abgases. Darunter ist zu verstehen, dass das Abgas der beispielsweise als Dieselmotor ausgebildeten Verbrennungskraftmaschine Stickoxide (NOₓ) enthalten kann, welche zumindest teilweise mit Hilfe des Reduktionsmittels entfernt beziehungsweise beseitigt werden. Hierbei können die Stickoxide beispielsweise mit Ammoniak (NH₃) aus dem Reduktionsmittel zu Stickstoff und Wasser reagieren. Diese Reaktion erfolgt beispielsweise im Rahmen einer selektiven katalytischen Reduktion (SCR), insbesondere in einem von dem mit dem Reduktionsmittel versetzten Abgas durchströmbaren SCR-Katalysator, welcher Bestandteil der Abgasnachbehandlungseinrichtung sein kann.

Üblicherweise ist das Reduktionsmittel eine wässrige Lösung, insbesondere eine wässrige Harnstofflösung, welche beispielsweise mittels der Dosiereinrichtung in den Abgaskanal eingebracht, insbesondere eingespritzt, wird. Es hat sich dabei gezeigt, dass es zu Ablagerungen und insbesondere Harnstoffablagerungen insbesondere im Inneren der Abgasnachbehandlungseinrichtung beziehungsweise des Abgasführungselements kommen kann.

Aufgabe der vorliegenden Erfindung ist es daher, eine Abgasnachbehandlungseinrichtung der eingangs genannten Art derart weiterzuentwickeln, dass übermäßige Ablagerungen des Reduktionsmittels vermieden werden können.

Diese Aufgabe wird erfindungsgemäß durch eine Abgasnachbehandlungseinrichtung mit den Merkmalen des Patentanspruchs 1 gelöst. Vorteilhafte Ausgestaltungen mit zweckmäßigen Weiterbildungen der Erfindung sind in den übrigen Ansprüchen angegeben.

Um eine Abgasnachbehandlungseinrichtung der im Oberbegriff des Patentanspruchs 1 angegebenen Art derart weiterzuentwickeln, dass übermäßige Ablagerungen des Reduktionsmittels, das heißt insbesondere übermäßige Harnstoffablagerungen, vermieden werden können, ist es erfindungsgemäß vorgesehen, dass durch das in dem zweiten Teilkanal angeordnete zweite Strömungsteilungselement der zweite Teilkanal in einen ersten Unterkanal, einen zweiten Unterkanal und einen dritten Unterkanal unterteilt beziehungsweise aufgeteilt ist. In dem zweiten Teilkanal ist eine Zuführstelle für Reduktionsmittel zum Entsticken des Abgases angeordnet. Der erste Unterkanal ist von einer ersten Unterströmung des Abgases durchströmbar, wobei der zweite Unterkanal von einer zweiten Unterströmung des Abgases durchströmbar ist. Außerdem ist der dritte Unterkanal von einer dritten Unterströmung des Abgases durchströmbar. Die genannten Unterströmungen sind dabei jeweilige weitere Teilströmungen der zweiten Teilströmung, welche somit die Unterströmungen umfasst. Mit anderen Worten wird die den zweiten Teilkanal durchströmende zweite Teilströmung mittels des zweiten Strömungselements in die Unterströmungen aufgeteilt, sodass das Abgas beziehungsweise eine Gesamtströmung des Abgases nicht nur mittels des ersten Strömungsteilungselements in die erste Teilströmung und die zweite Teilströmung, sondern auch mittels des zweiten Strömungsteilungselements in die Unterströmungen weiter aufgeteilt wird.

Das zweite Strömungsteilungselement weist dabei einen von der zweiten Unterströmung und der dritten Unterströmung durchströmbaren und sich in Strömungsrichtung der zweiten Unterströmung und der dritten Unterströmung durchströmbaren zweiten Kanalbereich auf, welcher zylindrisch oder sich erweiternd, insbesondere bezüglich einer Mittelachse der Dosiereinrichtung, ausgebildet ist.

Der erste Kanalbereich des ersten Strömungsteilungselements erweitert sich erfindungsgemäß entlang einer Einspritzrichtung des Reduktionsmittels.

Vorzugsweise ist das Reduktionsmittel mittels der Dosiereinrichtung unter Ausbildung eines Sprühkegels, dessen Kegelwinkel mindestens 20 Grad, besonders bevorzugt mindestens 25 Grad beträgt, in den Abgaskanal einbringbar, wobei die Strömungsteilungselemente vollständig beziehungsweise sicher außerhalb des Sprühkegels angeordnet sind. Darunter ist zu verstehen, dass der Sprühkegel - wenn dieser in den Abgaskanal eingebracht beziehungsweise eingespritzt wird - die Strömungsteilungselemente gerade nicht berührt. Mit anderen Worten ist keines der Strömungsteilungselemente innerhalb des realen Sprühkegels, welcher auch als Spraykegel bezeichnet wird, angeordnet, sodass der Sprühkegel nicht mit den Strömungsteilungselementen kollidiert.

Mittels der Strömungsteilungselemente wird das Abgas beziehungsweise dessen Strömung mehrfach aufgeteilt, bis es an die Dosiereinrichtung, insbesondere dessen Düse, das heißt an die Zuführstelle gelangt. Die zur Düse geleiteten und vorzugsweise zu einer Sprayachse symmetrischen Teilströmungen und/oder Unterströmungen haben insbesondere die Aufgabe beziehungsweise den Zweck, das eindosierte Reduktionsmittel, das heißt dessen Spray zu stützen und zuverlässig aus dem düsennahen Bereich heraus zu transportieren und dort Ablagerungen zu vermeiden. Die übrigen Teilströmungen und/oder Unterströmungen sollen für eine großflächige Verteilung des Sprays an Wänden im düsenfernen Bereich sorgen, um die Flächenlast und damit die Auskühlung an den Wänden geringzuhalten. Dadurch, dass düsennahe Bauteile, insbesondere die Strömungsteilungselemente, nicht von dem Spray beaufschlagt werden, wird das Ablagerungsrisiko gering gehalten. Bei ansonsten gleichen Betriebsbedingungen können dadurch gegenüber herkömmlichen Abgasnachbehandlungseinrichtung die Dosierraten deutlich erhöht werden.

In der Folge ergeben sich die Vorteile, dass Ablagerungen im düsennahen und -fernen Bereich gering gehalten oder vermieden werden können, und es kann eine geringe, zumindest im Wesentlichen homogene Flächenlast von etwaig mit Reduktionsmittel beaufschlagten Wänden ermöglicht werden. Dadurch kann die Auskühlung gering gehalten werden, sodass das eindosierte Reduktionsmittel besonders gut verdampfen kann. Insbesondere können besonders hohe Dosiermengen des Reduktionsmittels realisiert werden. Außerdem kann der Abgasgegendruck gering gehalten werden, wodurch der Kraftstoffverbrauch besonders gering gehalten werden kann.

Insbesondere ist es vorzugsweise vorgesehen, dass der Kegelwinkel des Sprühkegels mehr als 20 Grad beträgt. Als besonders vorteilhaft hat es sich gezeigt, wenn der Kegelwinkel in einem Bereich von einschließlich 25 Grad bis einschließlich 120 Grad liegt. Beispielsweise schmiegen sich jeweilige, insbesondere innenumfangsseitige, Konturen der als Einbauten oder Einbauelemente ausgebildeten Strömungsteilungselemente an den Kegelwinkel, welcher auch als Spraykegelwinkel bezeichnet wird, an, sodass der Bauraumbedarf besonders gering gehalten werden kann.

Die Dosiereinrichtung, insbesondere deren etwaig vorgesehene Düse zum Einbringen des Sprühkegels in den Abgaskanal, wird üblicherweise auf Basis eines nominalen Kegelwinkels des Sprühkegels ausgelegt. Bei einer ersten Anwendung beträgt der nominale Kegelwinkel des Sprühkegels beispielsweise 40 Grad, wobei der nominale Kegelwinkel bei einer zweiten Anwendung beispielsweise 60 Grad beträgt. Daraus ergibt sich mit einer Toleranz von Messverfahren zum Erfassen des Kegelwinkels sowie mit einer Bauteiltoleranz der Dosiereinrichtung, insbesondere der Düse, ein realer Kegelwinkel des Sprühkegels von 30 bis 50 Grad in der ersten Anwendung und ein realer Kegelwinkel von 50 bis 70 Grad in der zweiten Anwendung. Mit anderen Worten liegt üblicherweise eine Toleranz des Kegelwinkels von +/- 10 Grad vor. In der zweiten Anwendung mit dem nominalen Kegelwinkel von 60 Grad wird beispielsweise der Kegelwinkel zusätzlich zu der Toleranz von + 10 Grad für den realen Kegelwinkel noch einmal um + 20 Grad und somit insgesamt auf 90 Grad festgelegt, sodass die zuvor genannten Einbauten sich an diesen Kegelwinkel von 90 Grad anschmiegen. In der Folge werden die Einbauten mit einer zusätzlichen Sicherheit nicht von dem Sprühkegel beziehungsweise von Spraytropfen des Sprühkegels getroffen. Durch die Berücksichtigung der zuvor genannten Toleranzen kann somit ein hinreichender Abstand der Einbauten von dem Sprühkegel realisiert werden, insbesondere bedeutet das, dass die Einbauten sicher nicht von dem Sprühkegel getroffen werden.

Da sich der erste Kanalbereich aufweitet, ist das erste Strömungsteilungselement beziehungsweise der erste Kanalbereich als Konus ausgebildet. Dabei ist das zweite Strömungsteilungselement beziehungsweise der zweite Kanalbereich zylindrisch oder ebenfalls als Konus ausgebildet. Durch den Einsatz nicht nur des ersten Strömungsteilungselements, sondern insbesondere auch des zweiten Strömungsteilungselements kann die Gesamtströmung des Abgases mehrfach aufgeteilt werden, bevor das Abgas zur Zuführstelle und somit beispielsweise zu einer an der Zuführstelle angeordneten Düse, über welche das Reduktionsmittel in das Abgasführungselement eingebracht wird, gelangt. Die zur Düse geleiteten Unterströmungen haben insbesondere die Aufgabe, das Reduktionsmittel zu stützen. Der Sprühkegel wird auch als Strahlkegel oder einfach als Strahl oder Spray bezeichnet, sodass das Reduktionsmittel unter Ausbildung eines zumindest im Wesentlichen kegelförmigen Strahls oder Sprays, das den Sprühkegel bildet, in das Abgasführungselement eingebracht wird. Dabei haben die Unterströmungen insbesondere die Aufgabe, das Spray zu stützen und zuverlässig aus einem düsennahen Bereich heraus zu transportieren, um dort Ablagerungen des Reduktionsmittels zu vermeiden. Die übrigen Unterströmungen und die erste Teilströmung sorgen für eine großflächige Verteilung des Sprays beziehungsweise Reduktionsmittels an Wandungsbereichen in düsenfernen Bereichen, um dort die sogenannte Flächenlast und damit die Auskühlung des Abgasführungselements zumindest gering zu halten. Dadurch kann die Gefahr, dass es zu Ablagerungen des Reduktionsmittels kommt, besonders gering gehalten werden.

Dadurch ist es bei der erfindungsgemäßen Abgasnachbehandlungseinrichtung möglich, bei ansonsten gleichen Betriebsbedingungen gegenüber üblichen Abgasnachbehandlungseinrichtungen besonders hohe Dosierraten zu realisieren, das heißt besonders hohe Mengen des Reduktionsmittels in das Abgasführungselement einzubringen, ohne dass es zu übermäßigen Ablagerungen kommt. Durch den Einsatz des zweiten Strömungsteilungselements ist nämlich eine besonders vorteilhafte Harnstoffaufbereitung ohne oder nur mit sehr geringer Ablagerungsbildung realisierbar trotz besonders hoher Dosierraten und geringerer Temperaturen. Dabei ist es insbesondere möglich, Ablagerungen sowohl in düsennahen als auch in düsenfernen Bereichen zu vermeiden. Dadurch, dass die Flächenlast von Wandungsbereichen, welche mit Reduktionsmittel gegebenenfalls beaufschlagt werden, gering gehalten werden kann, kann die Auskühlung dieser Wandungsbereiche gering gehalten werden. Daraus resultiert eine besonders vorteilhafte Verdampfung der eingebrachten Menge des Reduktionsmittels.

Durch die vorteilhafte, mittels des zweiten Strömungsteilungselements bewirkbaren Aufbereitung des Reduktionsmittels, welches beispielsweise eine wässrige Harnstofflösung ist, können auch besonders hohe Mengen des Reduktionsmittels eingebracht werden, um dadurch das Abgas besonders gut entsticken zu können. Insbesondere ist es möglich, eine besonders vorteilhafte Durchmischung von aus dem Reduktionsmittel freigesetztem Ammoniak bis zu einem Eintritt in einen SCR-Katalysator zu realisieren, wodurch besonders hohe Umsätze im SCR-Katalysator darstellbar sind (SCR - selektive katalytische Reduktion). Ein weiterer Vorteil ist, dass trotz des Einsatzes des zweiten Strömungsteilungselements und insbesondere durch dessen spezielle Ausgestaltung der Abgasgegendruck gering gehalten werden kann, sodass die erfindungsgemäße Abgasnachbehandlungseinrichtung einen besonders effizienten und somit kraftstoffverbrauchsarmen Betrieb der Verbrennungskraftmaschine ermöglicht. Somit ist das zweite Strömungsteilungselement zumindest nahezu kraftstoffverbrauchsneutral einsetzbar.

Bei einer vorteilhaften Ausführungsform der Erfindung verläuft zumindest ein von dem Abgas durchströmbarer Teil des Abgaskanals volutenartig. Dies bedeutet, dass zumindest ein Teil des Abgaskanals, insbesondere zumindest einer der Teilkanäle und/oder zumindest einer der Unterkanäle, die Form einer Spirale beziehungsweise einer Schnecke aufweist, sodass sich zumindest der Teil entlang seiner Richtung beziehungsweise entlang einer Richtung, in die das Abgas durch den volutenförmigen Teil strömt, verjüngt. Bezogen auf einen Zustand, in welchem der Sprühkegel in den Abgaskanal eingebracht, insbesondere eingespritzt wird, erstreckt sich somit zumindest der Teil des Abgaskanals in Umfangsrichtung des Sprühkegels über dessen Umfang schnecken- beziehungsweise spiralförmig.

Ferner ist es denkbar, dass zumindest eines der Strömungsteilungselemente, insbesondere das erste Strömungsteilungselement, auf seiner Innenseite eine Kontur eines Diffusors aufweist.

Bei einer weiteren vorteilhaften Ausführungsform der Erfindung ist der zweite Kanalbereich zumindest teilweise im ersten Kanalbereich angeordnet. Mit anderen Worten ist es beispielsweise vorgesehen, dass der zweite Kanalbereich zumindest teilweise in den ersten Kanalbereich hineinragt. Dadurch können eine besonders vorteilhafte Strömungsaufteilung und Strömungsführung des Abgases realisiert werden, sodass die Gefahr von Ablagerungen besonders gering gehalten werden kann.

Eine weitere Ausführungsform zeichnet sich dadurch aus, dass das Reduktionsmittel unter Ausbildung des Sprühkegels (Strahl beziehungsweise Spray) entlang einer mit der Einspritzrichtung zusammenfallenden, gedachten Geraden in den zweiten Teilkanal einbringbar ist, wobei die Kanalbereiche jeweils koaxial zur Geraden angeordnet sind. Mit anderen Worten ist es vorzugsweise vorgesehen, dass die Gerade mit jeweiligen Mittelachsen der Kanalbereiche zusammenfällt. Hierdurch kann eine übermäßige Ablagerung von Reduktionsmittel an Wandungsbereichen vermieden werden.

Da der Strahl beziehungsweise das Spray zumindest im Wesentlichen kegelförmig oder kegelstumpfförmig ist, ist es vorzugsweise vorgesehen, dass die gedachte Gerade mit der Mittelachse des Kegels beziehungsweise des Kegelstumpfs, das heißt mit der Mittelachse des Strahlkegels zusammenfällt.

Bei einer besonders vorteilhaften Ausführungsform der Erfindung ist der erste Teilkanal durch einen ersten Oberflächenbereich des ersten Strömungsteilungselements und einen dem ersten Oberflächenbereich zugewandten ersten Teil einer Innenseite des Abgasführungselements begrenzt, wobei der zweite Teilkanal durch einen dem ersten Oberflächenbereich abgewandten zweiten Oberflächenbereich des ersten Strömungsteilungselements und einen dem zweiten Oberflächenbereich zugewandten zweiten Teil der Innenseite des Abgasführungselements begrenzt ist. Hierdurch kann eine besonders vorteilhafte Strömungsaufteilung realisiert werden, sodass übermäßige Ablagerungen des Reduktionsmittels sicher vermieden werden können. Ferner kann eine besonders vorteilhafte Strömungsführung des Abgases realisiert werden, sodass der Abgasgegendruck in der Abgasnachbehandlungseinrichtung gering gehalten werden kann.

Um eine besonders vorteilhafte Strömungsführung und Strömungsaufteilung zu realisieren, ist es bei einer weiteren Ausführungsform der Erfindung vorgesehen, dass der erste Unterkanal durch einen dritten Teil des zweiten Oberflächenbereichs des ersten Strömungsteilungselements und einen dem dritten Teil zugewandten dritten Oberflächenbereich des zweiten Strömungsteilungselements begrenzt ist, wobei der dritte Unterkanal durch einen dem dritten Oberflächenbereich abgewandten vierten Oberflächenbereich des zweiten Strömungselements und einen dem vierten Oberflächenbereich zugewandten fünften Oberflächenbereich des zweiten Strömungselements begrenzt ist.

Ferner hat es sich als besonders vorteilhaft gezeigt, wenn der zweite Unterkanal durch einen dem fünften Oberflächenbereich abgewandten, sechsten Oberflächenbereich des zweiten Strömungsteilungselements und einen dem sechsten Oberflächenbereich zugewandten Teilbereich des zweiten Teils der Innenseite des Abgasführungselements begrenzt ist. Dadurch lässt sich eine besonders vorteilhafte Strömungsführung und Strömungsaufteilung realisieren, sodass übermäßige Ablagerungen vermieden werden können.

Eine weitere Ausführungsform zeichnet sich dadurch aus, dass dem dritten Unterkanal gerade Leitelemente zum Leiten des Abgases zugeordnet sind. Bei den geraden Leitelementen handelt es sich beispielsweise um gerade Flügel, welche zumindest im Wesentlichen eben beziehungsweise flächig oder planar ausgebildet sind und hierdurch eine zumindest im Wesentlichen symmetrische Anströmung an der Düse ermöglichen. Zur Realisierung einer besonders symmetrischen Anströmung an der Düse ist es beispielsweise möglich, ein zumindest im Wesentlichen vertikales Leitelement insbesondere in Form eines Blechs zu verwenden.

Bei einer weiteren vorteilhaften Ausführungsform der Erfindung sind gebogene Leitelemente zum Bewirken einer zumindest im Wesentlichen drallförmigen Strömung zumindest eines Teils des Abgases vorgesehen. Mittels der beispielsweise als gebogene Flügel ausgebildeten gebogenen Leitelemente kann zumindest einem Teil des Abgases eine drallförmige Strömung aufgeprägt werden, sodass eine vorteilhafte Verwirbelung des Abgases darstellbar ist. Infolge dieser Verwirbelung kann das Abgas besonders gut mit dem Reduktionsmittel durchmischt werden, sodass eine besonders gute Aufbereitung des Reduktionsmittels darstellbar ist. In der Folge können übermäßige Ablagerungen vermieden werden.

Dabei hat es sich als besonders vorteilhaft gezeigt, wenn die gebogenen Leitelemente im zweiten Teilkanal angeordnet sind. Dadurch kann im zweiten Kanalbereich, das heißt im inneren, zweiten Konus eine Drallströmung realisiert werden. Ziel hierbei ist es, eine Ablösung beziehungsweise Strömungsablösung im inneren Konus trotz großem Öffnungswinkel des inneren Konus zu vermeiden.

In weiterer Ausgestaltung der Erfindung ist es vorgesehen, dass zumindest eines der Strömungsteilungselemente, insbesondere das erste Strömungsteilungselement, auf seiner Innenseite eine Kontur eines Diffusors mit einem sich in Strömungsrichtung der jeweiligen Teilströmung oder Unterströmung verjüngenden ersten Längenbereich und einen sich in Strömungsrichtung daran anschließenden und erweiternden zweiten Längenbereich aufweist.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Schnittansicht einer Abgasnachbehandlungseinrichtung gemäß einer ersten Ausführungsform für eine Verbrennungskraftmaschine eines Kraftwagens, mit einem Abgasführungselement, welches zumindest einen von Abgas der Verbrennungskraftmaschine durchströmbaren Abgaskanal aufweist, in welchem ein erstes Strömungsteilungselement und ein zweites Strömungsteilungselement zur Strömungsaufteilung des Abgases angeordnet sind;
- Fig. 2: ausschnittsweise eine weitere schematische Schnittansicht der Abgasnachbehandlungseinrichtung;
- Fig. 3: ausschnittsweise eine weitere schematische Schnittansicht der Abgasnachbehandlungseinrichtung;
- Fig. 4: ausschnittsweise eine schematische und perspektivische Rückansicht der Abgasnachbehandlungseinrichtung;
- Fig. 5: eine schematische Schnittansicht der Abgasnachbehandlungseinrichtung entlang einer in Fig. 4 gezeigten Schnittlinie A-A;
- Fig. 6: eine vergrößerte Darstellung eines in Fig. 5 mit B bezeichneten Bereichs der Abgasnachbehandlungseinrichtung;
- Fig. 7a-e: jeweils ausschnittsweise eine schematische Schnittansicht der Abgasnachbehandlungseinrichtung zur Veranschaulichung der Funktionen der Strömungsteilungselemente;
- Fig. 8: eine schematische Schnittansicht der Abgasnachbehandlungseinrichtung;
- Fig. 9: ausschnittsweise eine schematische Schnittansicht der Abgasnachbehandlungseinrichtung gemäß einer zweiten Ausführungsform; und
- Fig. 10: ausschnittsweise eine schematische Perspektivansicht der Abgasnachbehandlungseinrichtung gemäß einer dritten Ausführungsform.

In den Fig. sind gleiche oder funktionsgleiche Elemente mit gleichen Bezugszeichen versehen.

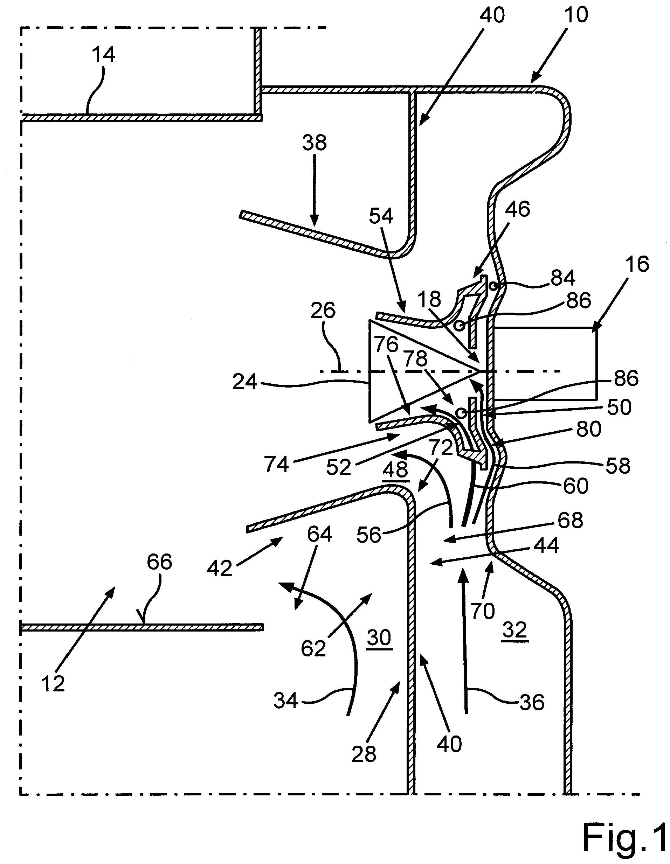

Fig. 1 zeigt in einer schematischen Schnittansicht eine Abgasnachbehandlungseinrichtung gemäß einer ersten Ausführungsform für eine Verbrennungskraftmaschine eines Kraftwagens. Die Verbrennungskraftmaschine ist beispielsweise als Dieselmotor ausgebildet und dient zum Antreiben des Kraftwagens. Die Abgasnachbehandlungseinrichtung umfasst wenigstens ein Abgasführungselement 10, welches zumindest einen von Abgas der Verbrennungskraftmaschine durchströmbaren und im Ganzen mit 12 bezeichneten Abgaskanal aufweist. Der Abgaskanal 12 erstreckt sich in ein Mischrohr 14 des Abgasführungselements 10, wobei das Mischrohr 14 insbesondere zum Mischen des Abgases mit einem Reduktionsmittel dient.

Die Abgasnachbehandlungseinrichtung umfasst ferner eine in Fig. 1 besonders schematisch dargestellte Dosiereinrichtung 16, mittels welcher an wenigstens einer Zuführstelle 18 das Reduktionsmittel in den Abgaskanal 12 einbringbar, insbesondere einspritzbar, ist. Das Reduktionsmittel dient zum Entsticken des Abgases. Darunter ist zu verstehen, dass mit Hilfe des Reduktionsmittels im Abgas enthaltene Stickoxide (NOₓ) zumindest teilweise aus dem Abgas entfernt werden. Das Reduktionsmittel ist beispielsweise eine wässrige Harnstofflösung, aus welcher im Abgaskanal 12 nach dem Einbringen in den Abgaskanal 12 Ammoniak (NH₃) freigesetzt wird. Die im Abgas enthaltenen Stickoxide können mit dem Ammoniak im Rahmen einer selektiven katalytischen Reduktion (SCR) zu Stickstoff und Wasser reagieren.

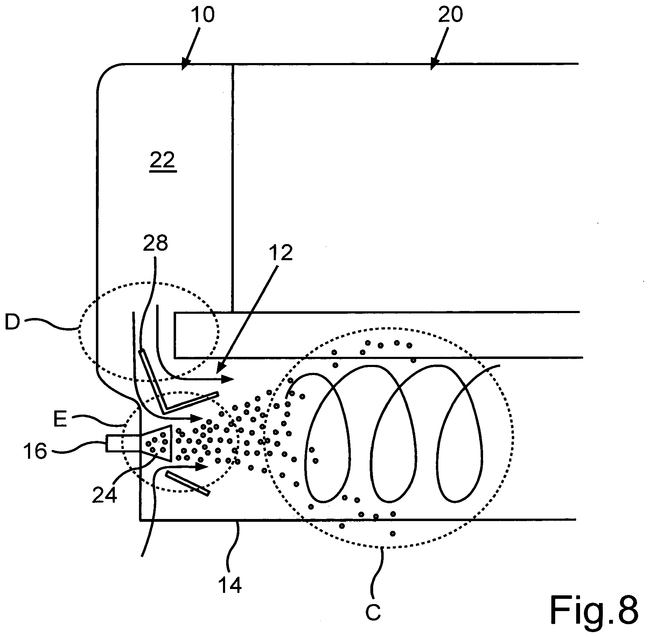

In Zusammenschau mit Fig. 8 ist erkennbar, dass stromauf der Zuführstelle 18 ein Partikelfilter 20 angeordnet ist, welcher von dem Abgas durchströmbar ist. Da die Verbrennungskraftmaschine vorliegend als Dieselmotor ausgebildet ist, ist der Partikelfilter 20 ein Dieselpartikelfilter (DPF). An den Partikelfilter 20 schließt sich eine Sammelkammer 22 an, in welcher sich das Abgas sammeln kann. Das Abgas kann dann von der Sammelkammer 22 in das Mischrohr 14 strömen, was im Folgenden noch genauer erläutert wird. Der Partikelfilter 20 dient dazu, Partikel und insbesondere Rußpartikel aus dem Abgas zu filtern.

Stromab der Zuführstelle 18 und insbesondere stromab des Mischrohrs 14 ist beispielsweise wenigstens ein SCR-Katalysator der Abgasnachbehandlungseinrichtung angeordnet. Mittels des SCR-Katalysators, welcher von dem Abgas und dem in das Abgas eindosierten beziehungsweise eingebrachten Reduktionsmittel durchströmbar ist, wird die selektive katalytische Reduktion bewirkt beziehungsweise unterstützt.

Aus Fig. 1 ist erkennbar, dass das Reduktionsmittel unter Ausbildung eines Sprühkegels 24 in den Abgaskanal 12 eingebracht wird, wobei der Sprühkegel 24 auch als Strahl oder Spray bezeichnet wird, der beziehungsweise das zumindest im Wesentlichen kegelförmig oder kegelstumpfförmig ist. Der Sprühkegel 24 weist somit eine Kegelform auf oder ist eine Kegelform, deren Mittelachse in Fig. 1 mit 26 bezeichnet ist. Die Mittelachse 26 ist eine gedachte Gerade, welche mit einer Einspritzrichtung zusammenfällt, in die das Reduktionsmittel mittels der Dosiereinrichtung 16 an der Zuführstelle 18 in den Abgaskanal 12 eingebracht und insbesondere eingespritzt wird. Dies bedeutet, dass sich der Sprühkegel 24 entlang der Einspritzrichtung und somit entlang der Mittelachse 26 von der Dosiereinrichtung 16 weg ausbreitet.

In dem Abgaskanal 12 ist nun ein erstes Strömungsteilungselement 28 angeordnet, mittels welchem der Abgaskanal 12 in einen ersten Teilkanal 30 und einen zweiten Teilkanal 32 unterteilt beziehungsweise aufgeteilt ist. Der erste Teilkanal 30 ist dabei von einer durch einen Richtungspfeil 34 veranschaulichten, ersten Teilströmung des Abgases durchströmbar. Der zweite Teilkanal 32 ist von einer durch einen Richtungspfeil 36 veranschaulichten zweiten Teilströmung des Abgases durchströmbar. Dies bedeutet, dass das Abgas, insbesondere eine Gesamtströmung des Abgases, mittels des ersten Strömungsteilungselements 28 in die erste Teilströmung und die zweite Teilströmung aufgeteilt wird. Dabei weist das erste Strömungsteilungselement 28 einen sich in Strömungsrichtung der zweiten Teilströmung erweiternden Kanalbereich 38 auf, welcher somit ein erster Konus ist.

Der erste Konus (erster Kanalbereich 38) ist dabei koaxial zur Mittelachse 26 angeordnet, sodass die Mittelachse des ersten Konus mit der Mittelachse 26 zusammenfällt. Stromauf des ersten Kanalbereichs 38 weist das erste Strömungsteilungselement 28 einen Wandungsbereich 40 auf, welcher zumindest im Wesentlichen vertikal beziehungsweise senkrecht zur Mittelachse 26 verläuft. Das Strömungsteilungselement 28 ist beispielsweise aus Blech gebildet. Da der Wandungsbereich 40 stromauf des ersten Kanalbereichs 38 angeordnet ist, wird die Gesamtströmung zunächst mittels des Wandungsbereichs 40 aufgeteilt. Der erste Teilkanal 30 ist dabei auf einer ersten Seite 42 des Strömungsteilungselements 28 angeordnet, wobei der zweite Teilkanal 32 auf einer der ersten Seite 42 abgewandten, zweiten Seite 44 des ersten Strömungsteilungselements 28 angeordnet ist.

Im Bereich der Zuführstelle 18 weist die Dosiereinrichtung 16 beispielsweise eine Düse auf, mittels welcher das Reduktionsmittel unter Ausbildung des Sprühkegels 24 in den Abgaskanal 12 eingespritzt wird. Der zumindest im Wesentlichen vertikale und beispielsweise aus Blech gebildete Wandungsbereich 40 ermöglicht dabei insbesondere die Realisierung einer zumindest im Wesentlichen symmetrischen Anströmung an der Düse beziehungsweise der Zuführstelle 18.

Um nun auch bei hohen Dosierraten, das heißt bei hohen Mengen des in den Abgaskanal 12 eingebrachten Reduktionsmittels die Gefahr von Ablagerungen des Reduktionsmittels gering zu halten beziehungsweise übermäßige Ablagerungen zu vermeiden, ist in dem zweiten Teilkanal 32 ein zweites Strömungsteilungselement 46 angeordnet, welches beispielsweise aus einem metallischen Werkstoff beziehungsweise Blech gebildet sein kann. Wie im Folgenden noch genauer erläutert wird, wird durch das zweite Strömungsteilungselement 46 eine weitere Strömungsteilung des Abgases, insbesondere der zweiten Teilströmung, bewirkt, sodass eine besonders vorteilhafte Aufbereitung des Reduktionsmittels realisiert werden kann. Infolge dieser Aufbereitung kann das Reduktionsmittel besonders gut mit dem Abgas vermischt werden, sodass Ablagerungen des Reduktionsmittels im Inneren der Abgasführungseinrichtung zumindest gering gehalten werden können.

Durch das zweite Strömungsteilungselement 46 ist der zweite Teilkanal 32 in einen ersten Unterkanal 48, einen zweiten Unterkanal 50 und einen zwischen dem ersten Unterkanal 48 und dem zweiten Unterkanal 50 angeordneten dritten Unterkanal 52 unterteilt. Die Unterkanäle 48, 50 und 52 sind somit weitere Teilkanäle des zweiten Teilkanals 32, wobei der erste Unterkanal 48 von einer ersten Unterströmung, der zweite Unterkanal 50 von einer zweiten Unterströmung und der dritte Unterkanal 52 von einer dritten Unterströmung des Abgases durchströmbar ist. Dies bedeutet, dass die zweite Teilströmung des Abgases mittels des zweiten Strömungsteilungselements 46 weiter in die drei Unterströmungen aufgeteilt wird, wodurch die Gefahr von Ablagerungen besonders gering gehalten werden kann. Dabei weist das zweite Strömungsteilungselement 46 einen von der zweiten und dritten Unterströmung durchströmbaren und sich in Strömungsrichtung der zweiten und dritten Unterströmung erweiternden, zweiten Kanalbereich 54 auf, welcher somit ein zweiter Konus ist.

Durch einen Richtungspfeil 56 ist die erste Unterströmung veranschaulicht, wobei durch einen Richtungspfeil 58 die zweite Unterströmung veranschaulicht ist. Ferner ist durch einen Richtungspfeil 60 die dritte Unterströmung veranschaulicht. Die durch den Richtungspfeil 34 veranschaulichte erste Teilströmung dient insbesondere dazu, das Spray (Sprühkegel 24) vor einem Hauptstrom zu schützen. Die erste Unterströmung, welche durch den Richtungspfeil 56 veranschaulicht ist, dient insbesondere dazu, zu verhindern, dass das Spray auf den ersten, äußeren Konus (erster Kanalbereich 38) auftrifft. Die durch den Richtungspfeil 58 veranschaulichte zweite Unterströmung dient dazu, den Impuls des Sprays zu erhöhen und das Spray in das Mischrohr 14 hinauszubefördern. Schließlich dient die durch den Richtungspfeil 60 veranschaulichte dritte Unterströmung dazu, zu verhindern, dass das Spray den inneren, zweiten Konus (zweiter Kanalbereich 54) trifft und zum Erhöhen des Impulses des Sprays (Sprühkegel 24).

Um die Gefahr von Ablagerungen besonders gering zu halten, ist - wie aus Fig. 1 erkennbar ist - der innere zweite Konus zumindest teilweise im äußeren ersten Konus angeordnet. Vorliegend ragt ein Teilbereich des inneren Konus in den äußeren Konus hinein. Die Zuführstelle 18 ist dabei im zweiten Teilkanal 32 und vorliegend im zweiten Unterkanal 50 angeordnet, wobei das Spray den inneren Konus durchdringt und bis in den äußeren Konus reicht.

Aus Fig. 1 ist ferner erkennbar, dass auch die Mittelachse des Kanalbereichs 54 mit der Mittelachse 26 zusammenfällt, sodass die Kanalbereiche 38 und 54 koaxial zueinander und koaxial zur Mittelachse 26 angeordnet sind. Dabei erweitert sich der zweite Kanalbereich 54 in die Einspritzrichtung des Sprays (Sprühkegel 24) und somit entlang der Mittelachse 26 von der Dosiereinrichtung 16 weg wie auch der erste Kanalbereich 38.

Der erste Teilkanal 30 ist durch einen ersten Oberflächenbereich 62 des ersten Strömungsteilungselements 28 und einen dem ersten Oberflächenbereich 62 zugewandten ersten Teil 64 einer den Abgaskanal 12 begrenzenden Innenseite 66 des Abgasführungselements 10 begrenzt. Der zweite Teilkanal 32 ist durch einen dem ersten Oberflächenbereich 62 abgewandten, zweiten Oberflächenbereich 68 des ersten Strömungsteilungselements 28 und einen dem zweiten Oberflächenbereich 68 zugewandten zweiten Teil 70 der Innenseite 66 des Abgasführungselements 10 begrenzt.

Der erste Unterkanal 48 ist durch einen dritten Teil 72 des zweiten Oberflächenbereichs 68 des ersten Strömungsteilungselements 28 und einen dem dritten Teil 72 zugewandten dritten Oberflächenbereich 74 des zweiten Strömungsteilungselements 46 begrenzt. Der dritte Unterkanal 52 ist durch einen dem dritten Oberflächenbereich 74 abgewandten vierten Oberflächenbereich 76 des zweiten Strömungsteilungselements 46 und einen dem vierten Oberflächenbereich 76 zugewandten fünften Oberflächenbereich 78 des zweiten Strömungsteilungselements 46 begrenzt.

Ferner ist der zweite Unterkanal 50 durch einen dem fünften Oberflächenbereich 78 abgewandten, sechsten Oberflächenbereich 80 des zweiten Strömungsteilungselements 46 und einen dem sechsten Oberflächenbereich 80 zugewandten Teilbereich des zweiten Teils 70 der Innenseite 66 des Abgasführungselements 10 begrenzt.

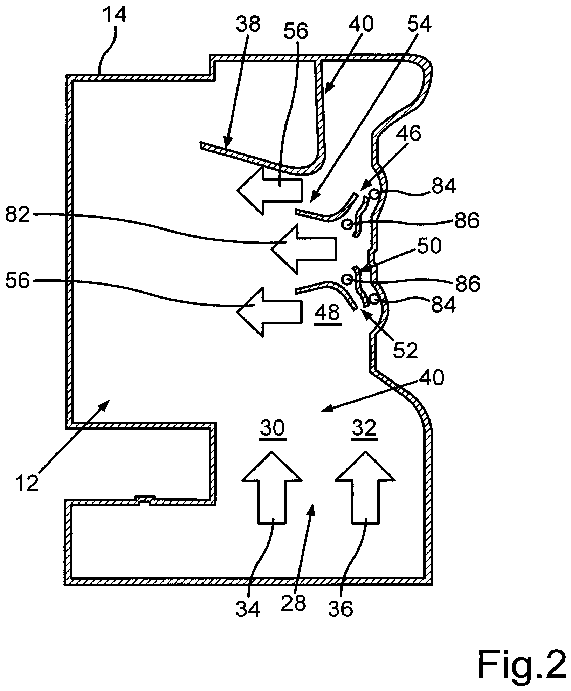

In Fig. 2 ist eine prozentuale Aufteilung des Gesamtmassenstroms durch das Abgasführungselement 10 veranschaulicht. Der Anteil der durch den Richtungspfeil 34 veranschaulichten ersten Teilströmung am Gesamtmassenstrom beträgt mindestens 55 Prozent und höchstens 75 Prozent. Der Anteil der durch den Richtungspfeil 36 veranschaulichten zweiten Teilströmung am Gesamtmassenstrom, insbesondere Gesamtabgasmassenstrom, beträgt mindestens 25 Prozent und höchstens 45 Prozent. Die erste Unterströmung ist in Fig. 2 durch Richtungspfeile 56 veranschaulicht. Der Anteil der ersten Unterströmung am Gesamtmassenstrom beträgt mindestens 22 Prozent und maximal 40 Prozent. Der Anteil einer in Fig. 2 durch einen Richtungspfeil 82 veranschaulichten Strömung durch den inneren zweiten Konus am Gesamtmassenstrom beträgt beispielsweise mindestens 2,5 Prozent und höchstens 7,5 Prozent.

Die zweite Unterströmung ist in Fig. 2 mit 84 bezeichnet, wobei der Anteil der zweiten Unterströmung 84 am Gesamtmassenstrom mindestens 0 Prozent und maximal 2 Prozent beträgt. Die dritte Unterströmung ist in Fig. 2 mit 86 bezeichnet, wobei der Anteil der dritten Unterströmung 86 am Gesamtmassenstrom mindestens 3 Prozent und höchstens 6,5 Prozent beträgt.

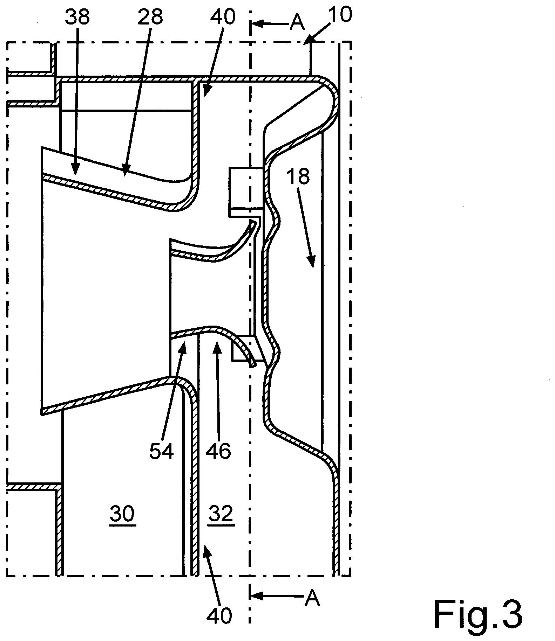

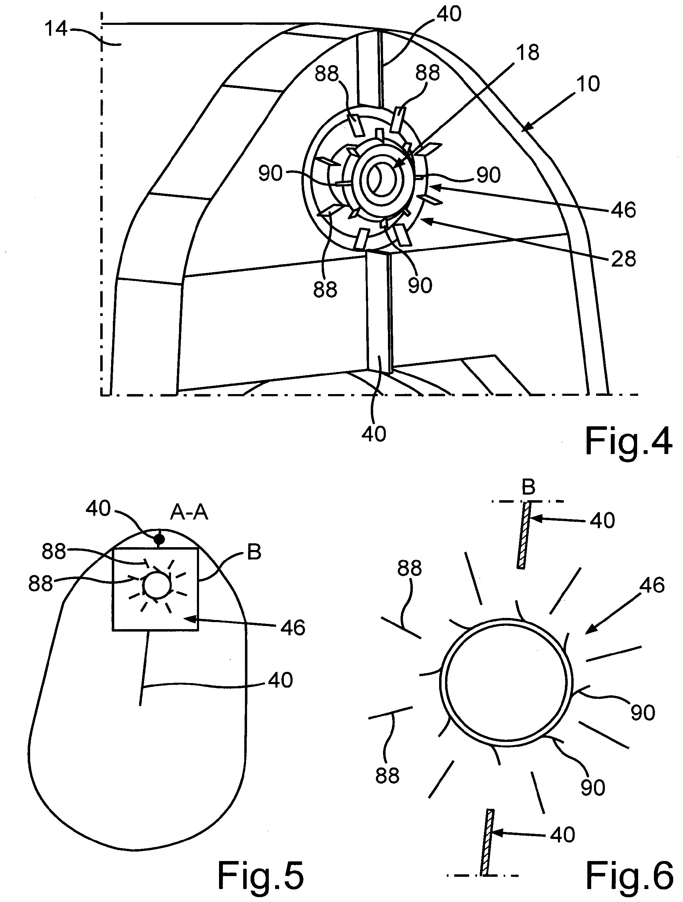

Fig. 3 zeigt die Abgasnachbehandlungseinrichtung ausschnittsweise in einer schematischen Schnittansicht, wobei in Fig. 3 eine Schnittlinie A-A gezeigt ist. Aus Fig. 3 bis 5 ist besonders gut der zumindest im Wesentlichen vertikale Wandungsbereich 40 erkennbar, wodurch ein zumindest im Wesentlichen vertikales Blech zur Realisierung einer symmetrischen Anströmung an der Düse gebildet ist. Fig. 6 zeigt einen in Fig. 5 mit B bezeichneten Bereich in einer vergrößerten Ansicht. Wie aus Fig. 4 bis 6 erkennbar ist, sind im dritten Unterkanal 52 gerade Leitelemente in Form von geraden Flügeln 88 zugeordnet, durch welche eine zumindest im Wesentlichen symmetrische Anströmung an der Düse realisierbar ist. Darüber hinaus sind gebogene Leitelemente in Form von gebogenen Flügeln 90 vorgesehen, wobei die gebogenen Leitelemente beispielsweise dem zweiten Teilkanal 32 und insbesondere dem dritten Unterkanal 52 zugeordnet sind, um dadurch eine Drallströmung beziehungsweise eine zumindest im Wesentlichen drallförmige Strömung des Abgases im inneren zweiten Konus zu realisieren. Ziel hierbei ist, eine Ablösung im inneren zweiten Konus trotz eines großen Öffnungswinkels des inneren zweiten Konus zu vermeiden.

Eine solche zumindest im Wesentlichen drallförmige Strömung des Abgases ist in Fig. 8 in einem Bereich C gezeigt. Diese drallförmige Strömung verläuft zumindest im Wesentlichen spiralförmig oder schraubenförmig um eine Längsachse, welche mit der Hauptströmungsrichtung zusammenfällt, in die das Abgas das Mischrohr 14 durchströmt.

Ferner ist in Fig. 8 ein Bereich D gezeigt, in welchem das Abgas aufgeteilt wird. In einem Bereich E erfolgt eine Strömungsführung des Abgases, welche insbesondere durch das zweite Strömungsteilungselement 46 bewirkt wird. Hierdurch kann an der Düse ein Teilstrom erzeugt werden, um das Spray zu stützen und aus einem düsennahen Bereich ohne Wandbenetzung heraus zu transportieren. Eine Hauptströmung kann in das Mischrohr 14 gelangen, wobei dieser Hauptströmung ein Drall aufgeprägt werden kann, um eine großflächige Benetzung zu erreichen. Dadurch kann an der Innenseite 66 eine geringe Flächenlast vermieden werden, sodass ein übermäßiger Temperaturabfall vermieden werden kann. In der Folge kann das Reduktionsmittel verdampfen, wodurch übermäßige Ablagerungen vermieden werden können.

Das düsennahe zweite Strömungsteilungselement 46 dient somit insbesondere dazu, eine düsennahe Teilströmung insbesondere in Form der zweiten Unterströmung zu realisieren, um die Düse selbst zu spülen und den Sprayimpuls zu erhöhen, damit das Reduktionsmittel beziehungsweise dessen Tropfen in Richtung des Mischrohrs 14 transportiert werden. Hierbei kann eine weitere, nicht skizzierte Strömungsteilung erfolgen. Die erste und/oder dritte Unterströmung dient zur Realisierung eines Mantels um das Spray (Sprühkegel 24), um zu verhindern, dass der äußere erste Konus benetzt wird. Strömungs-Ablösungen an jeweiligen Innenwänden der beiden Koni sind vorzugsweise zu vermeiden, wobei eine anliegende Strömung parallel zu den jeweiligen Innenwänden angestrebt wird. Dadurch können Tropfen abtransportiert und eine Wandbenetzung vermieden werden. Ferner kann der Wärmeeintrag in die Wände erhöht werden, um im Fall von Benetzungen die Verdampfung des Reduktionsmittels sicherzustellen.

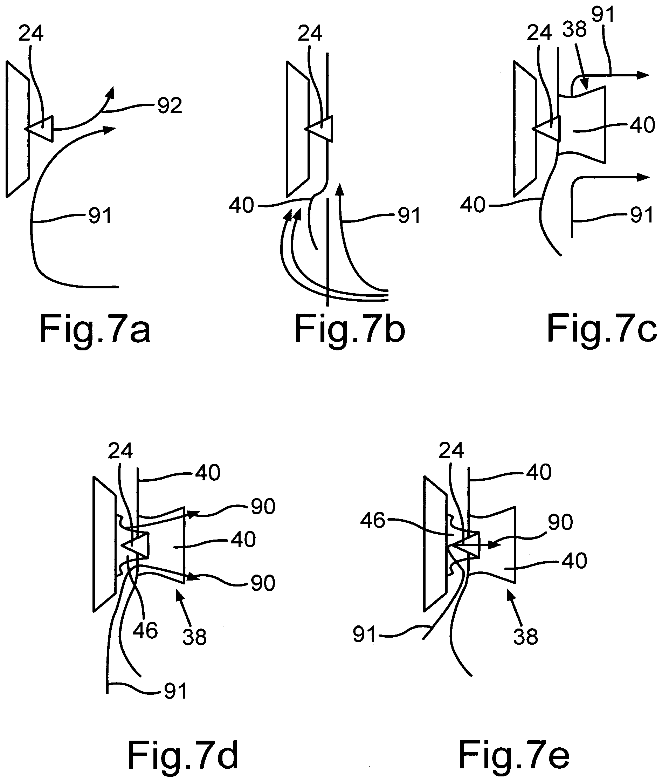

Fig. 7a-e zeigen jeweilige Schnittansichten der Abgasnachbehandlungseinrichtung, um jeweilige Funktionen zu veranschaulichen. Fig. 7a veranschaulicht die Strömung des Abgases ohne jegliches Strömungsteilungselement und Leitelement. Die Strömung des Abgases ist in Fig. 7a durch einen Richtungspfeil 91 veranschaulicht, wobei ein Richtungspfeil 92 die Strömung des Reduktionsmittels veranschaulicht.
In Fig. 7b ist der Wandungsbereich 40 vorgesehen, durch welchen das Abgas beziehungsweise dessen Strömung aufgeteilt werden kann, wobei die Strömung des Abgases in Fig. 7b durch Richtungspfeile 91 veranschaulicht ist.

Fig. 7c zeigt die Abgasnachbehandlungseinrichtung mit dem ersten äußeren Konus (erstes Strömungsteilungselement 28), wobei der äußere Konus das Spray vor der Abgasströmung schützt.

In Fig. 7d ist die Funktion des inneren Konus (zweites Strömungsteilungselement 46) veranschaulicht. Der innere Konus schützt das Spray vor einer seitlichen Stützströmung. Ferner ist aus Fig. 7e erkennbar, dass der innere Konus die Strömung führt, um das Spray (Sprühkegel 24) von hinten zu unterstützen.

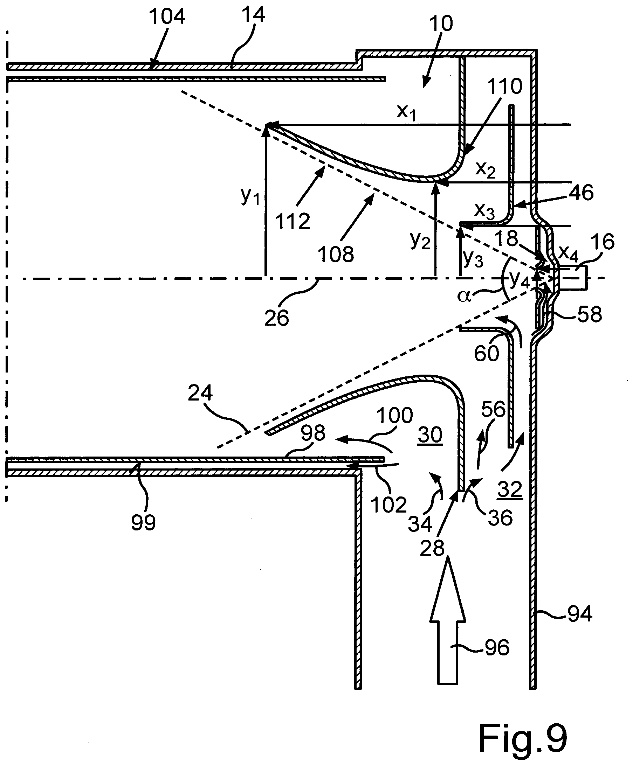

Fig. 9 zeigt ausschnittsweise in einer schematischen Schnittansicht eine zweite Ausführungsform der Abgasnachbehandlungseinrichtung. Aus Fig. 9 ist erkennbar, dass den Strömungsteilungselementen 28 und 46 das Abgas mittels eines Abgasrohrs 94 zugeführt wird, wobei in Fig. 9 eine Strömung des Abgases durch das Abgasrohr 94 durch einen Pfeil 96 veranschaulicht ist. Wie in Fig. 9 durch die Richtungspfeile 34 und 36 veranschaulicht ist, wird die durch den Pfeil 96 veranschaulichte Strömung des Abgases mittels des Strömungsteilungselements 28 in die durch den Richtungspfeil 34 veranschaulichte erste Teilströmung und in die durch den Richtungspfeil 36 veranschaulichte zweite Teilströmung aufgeteilt.

Ferner ist aus Fig. 9 besonders gut erkennbar, dass der Sprühkegel 24, dessen Kegelwinkel in Fig. 9 mit α bezeichnet ist, in den Abgaskanal 10, insbesondere in den dritten Unterkanal 52, eingebracht, beziehungsweise eingespritzt, wird. Hierzu weist beispielsweise die Dosiereinrichtung 16, welche auch als Dosiermodul bezeichnet wird, eine Düse auf, mittels welcher der Sprühkegel 24 in den Abgaskanal 10 eingebracht, insbesondere eingespritzt, wird.

Um nun eine besonders vorteilhafte Durchmischung zu realisieren, ist es bei der Abgasnachbehandlungseinrichtung vorgesehen, dass die Strömungsteilungselemente 28 und 46 vollständig außerhalb des Sprühkegels 24 angeordnet sind, wobei der Kegelwinkel α mindestens 25 Grad, vorzugsweise mehr als 25 Grad, beträgt. Insbesondere liegt der Kegelwinkel α in einem Bereich von einschließlich 25 Grad bis einschließlich 120 Grad.

Da die Strömungsteilungselemente 28 und 46 in dem Abgaskanal 10 angeordnet sind, sind die Strömungsteilungselemente 28 und 46 als Einbauten ausgebildet. Die geometrischen Abmaßen der Einbauten sind dabei so gewählt, dass keines der Strömungsteilungselemente 28 und 46 innerhalb des realen Sprühkegels 24 liegt und somit nicht mit dem Sprühkegel 24 kollidiert. Unter dem realen Sprühkegel 24 ist der Sprühkegel zu verstehen, welcher tatsächlich mittels der Dosiereinrichtung 16 in den Abgaskanal 10 eingebracht beziehungsweise eingespritzt wird.

In Fig. 9 sind Abmaße der Einbauten mit x1, x2, x3, x4, y1, y2, y3 und y4 bezeichnet, wobei für diese Abmaße bezüglich des Kegelwinkels α Folgendes gilt:
y1/x1 > tan(α/2)
y2/x2 > tan(α/2)
y3/x3 > tan(α/2)
y4/x4 > tan(α/2)

Damit das Strömungsteilungselement 46 bei der zweiten Ausführungsform nicht in den Sprühkegel 24 hineinragt, ist das Strömungsteilungselement 46 bei der zweiten Ausführungsform gegenüber der ersten Ausführungsform in axialer Richtung, insbesondere zur Dosiereinrichtung 16 hin, eingekürzt. Ferner ist es beispielsweise bei der ersten Ausführungsform vorgesehen, dass das zweite Strömungsteilungselement 46 beziehungsweise der dritte Unterkanal 52, insbesondere in Strömungsrichtung des Abgases durch den dritten Unterkanal 52, zumindest im Wesentlichen kegelförmig oder kegelstumpfförmig ausgebildet ist und sich dabei in Strömungsrichtung des Abgases erweitert. Bei der zweiten Ausführungsform ist jedoch das Strömungsteilungselement 46 beziehungsweise der dritte Unterkanal 52 zumindest im Wesentlichen zylindrisch, insbesondere bezüglich der Mittelachse 26, ausgebildet.

Ferner ist bei der zweiten Ausführungsform optional eine weitere Strömungsaufteilung vorgesehen, welche mittels eines Teilungselements 98 realisiert wird. Das Teilungselement 98 ist beispielsweise als Rohr ausgebildet, welches beispielsweise zumindest teilweise in dem Mischrohr 14 beziehungsweise in dem Abgaskanal 12 angeordnet ist. Hierdurch ist beispielsweise eine Rohr-in-Rohr-Lösung vorgesehen. Durch das Teilungselement 98 wird die durch den Richtungspfeil 34 veranschaulichte erste Teilströmung des Abgases in eine durch einen Pfeil 100 veranschaulichte vierte Unterströmung und in eine durch einen Pfeil 102 veranschaulichte fünfte Unterströmung aufgeteilt. Die vierte Unterströmung strömt innenseitig des Teilungselements 98 und somit auf einer dem Mischrohr 14 abgewandten Innenseite des Teilungselements 98 entlang, wobei die fünfte Unterströmung außenseitig des Teilungselements 98 und somit auf einer dem Mischrohr 14 zugewandten Außenseite des Teilungselements 98 entlangströmt. Da das Teilungselement 98 von dem Mischrohr 14 beabstandet ist, bilden das Mischrohr 14 und das Teilungselement 98 einen Ringspalt 104, durch welchen die fünfte Unterströmung strömt. Der Ringspalt 104 ist in seiner radialen Richtung nach innen hin durch eine außenumfangsseitige Mantelfläche 99 des Teilungselements 98 begrenzt und besonders funktional, wenn er eine, insbesondere in radialer Richtung verlaufende, Erstreckung aufweist, welche in einem Bereich von einschließlich drei Millimeter bis einschließlich 20 Millimeter liegt. Mit anderen Worten weist der Ringspalt vorzugsweise eine Breite auf, welche in einem Bereich von einschließlich 3 Millimeter bis einschließlich 20 Millimeter liegt. Durch die mittels der Teilungselements 98 bewirkte beziehungsweise bewirkbare Aufteilung der zweiten Teilströmung ergeben sich somit insgesamt fünf Unterströmungen beziehungsweise Teilströme, sodass eine besonders vorteilhafte Durchmischung realisierbar ist.

Ferner weist das erste Strömungsteilungselement 28 auf seiner Innenseite eine Kontur eines Diffusors 108 mit einem sich in Strömungsrichtung der zweiten Teilströmung verjüngenden ersten Längenbereich 110 und einen sich in Strömungsrichtung daran anschließenden und erweiternden zweiten Längenbereich 112 auf.

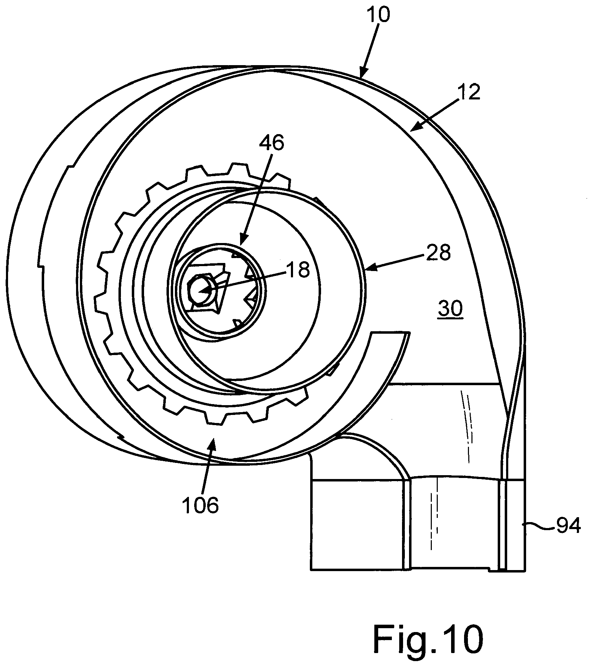

Fig. 10 zeigt ausschnittsweise in einer schematischen und geschnittenen Perspektivansicht eine dritte Ausführungsform der Abgasnachbehandlungseinrichtung beziehungsweise des Abgasnachbehandlungselements 10. Bei der dritten Ausführungsform ist es vorgesehen, dass zumindest ein von dem Abgas durchströmbarer Teil des Abgaskanals 12 volutenartig und somit spiral- beziehungsweise schneckenförmig verläuft. Insbesondere ist es denkbar, dass zumindest einer der Teilkanäle 30 und 32 und/oder zumindest einer der Unterkanäle 48, 50 und 52 volutenartig verläuft. Ferner ist es denkbar, dass durch die beschriebene, mittels des Teilungselements 98 bewirkte Unterteilung zwei weitere Unterkanäle geschaffen sind, sodass alternativ oder zusätzlich einer der weiteren Unterkanäle zumindest im Wesentlichen volutenartig und somit schnecken- beziehungsweise spiralförmig verläuft. Durch diese volutenartige Ausgestaltung zumindest eines Teils des Abgaskanals verjüngt sich dieser volutenartige Teil des Abgaskanals in Richtung der Mittelachse 26 und somit nach innen hin. Mit anderen Worten ist es bei der dritten Ausführungsform vorgesehen, dass zumindest ein Teil des Abgasführungselements und somit zumindest ein Teil des Abgaskanals 12 die geometrische Kontur beziehungsweise Form einer Volute aufweist. Diese Volute ist in Fig. 10 besonders gut erkennbar und dort mit 106 bezeichnet wobei es sich bei der Volute 106 beispielsweise um den bei der ersten Ausführungsform vorgesehenen Teilkanal 30 handelt.

### Bezugszeichenliste

- 10: Abgasführungselement
- 12: Abgaskanal
- 14: Mischrohr
- 16: Dosiereinrichtung
- 18: Zuführstelle
- 20: Partikelfilter
- 22: Sammelkammer
- 24: Spray
- 26: Mittelachse
- 28: erstes Strömungsteilungselement
- 30: erster Teilkanal
- 32: zweiter Teilkanal
- 34: Richtungspfeil
- 36: Richtungspfeil
- 38: erster Kanalbereich
- 40: Wandungsbereich
- 42: erste Seite
- 44: zweite Seite
- 46: zweites Strömungsteilungselement
- 48: erster Unterkanal
- 50: zweiter Unterkanal
- 52: dritter Unterkanal
- 54: zweiter Kanalbereich
- 56: Richtungspfeil
- 58: Richtungspfeil
- 60: Richtungspfeil
- 62: erster Oberflächenbereich
- 64: erster Teil
- 66: Innenseite
- 68: zweiter Oberflächenbereich
- 70: zweiter Teil
- 72: dritter Teil
- 74: dritter Oberflächenbereich
- 76: vierter Oberflächenbereich
- 78: fünfter Oberflächenbereich
- 80: sechster Oberflächenbereich
- 82: Richtungspfeil
- 84: zweite Unterströmung
- 86: dritte Unterströmung
- 88: gerade Flügel
- 90: gebogene Flügel
- 91: Richtungspfeil
- 92: Richtungspfeil
- 94: Abgasrohr
- 96: Pfeil
- 98: Teilungselement
- 100: Pfeil
- 102: Pfeil
- 104: Ringspalt
- 106: Volute
- B: Bereich
- C: Bereich
- D: Bereich
- E: Bereich

## Patentansprüche

1. Abgasnachbehandlungseinrichtung für eine Verbrennungskraftmaschine eines Kraftwagens, mit wenigstens einem Abgasführungselement (10), welches zumindest einen von Abgas der Verbrennungskraftmaschine durchströmbaren Abgaskanal (12) aufweist, mit einer Dosiereinrichtung (16), mittels welcher an wenigstens ein Zuführstelle (18) ein Reduktionsmittel zum Entsticken des Abgases in den Abgaskanal (12) einbringbar ist, und mit einem in dem Abgaskanal (12) angeordneten ersten Strömungsteilungselement (28), mittels welchem der Abgaskanal (12) in einen von einer ersten Teilströmung des Abgases durchströmbaren ersten Teilkanal (30) und einen von einer zweiten Teilströmung des Abgases durchströmbaren zweiten Teilkanal (32), in welchem die Zuführstelle (18) angeordnet ist, unterteilt ist, wobei das erste Strömungsteilungselement (28) einen von der zweiten Teilströmung durchströmbaren und sich in Strömungsrichtung der zweiten Teilströmung erweiternden Kanalbereich (38) aufweist, wobei
in dem zweiten Teilkanal (32) ein zweites Strömungsteilungselement (46) angeordnet ist, in welchem die Zuführstelle (18) angeordnet ist,
**dadurch gekennzeichnet, dass**
durch das zweite Strömungsteilungselement (46) der zweite Teilkanal (32)in einen von einer ersten Unterströmung des Abgases durchströmbaren, ersten Unterkanal (48), einen von einer zweiten Unterströmung (84) des Abgases durchströmbaren, zweiten Unterkanal (50) und einen von einer dritten Unterströmung (86) des Abgases durchströmbaren, zwischen dem ersten Unterkanal (48) und dem zweiten Unterkanal (50) angeordneten, dritten Unterkanal (52) unterteilt ist, wobei das zweite Strömungsteilungselement (46) einen von der zweiten und dritten Unterströmung (84, 86) durchströmbaren und sich in Strömungsrichtung der zweiten und der dritten Unterströmung (84, 86) zylindrischen oder erweiternden, zweiten Kanalbereich (54) aufweist und wobei der erste Kanalbereich (38) des ersten Strömungsteilungselements (28) sich entlang einer Einspritzrichtung des Reduktionsmittels erweitert.

2. Abgasnachbehandlungseinrichtung nach Anspruch 1,
**dadurch gekennzeichnet, dass**
das Reduktionsmittel mittels der Dosiereinrichtung (16) unter Ausbildung eines Sprühkegels (24), dessen Kegelwinkel mindestens 20 Grad beträgt, in den Abgaskanal (12) einbringbar ist, wobei die Strömungsteilungselemente (28, 46) vollständig außerhalb des Sprühkegels (24) angeordnet sind.

3. Abgasnachbehandlungseinrichtung nach Anspruch 1 oder 2,
**dadurch gekennzeichnet, dass**
zumindest ein von dem Abgas durchströmbarer Teil des Abgaskanals (12) volutenartig verläuft.

4. Abgasnachbehandlungseinrichtung nach einem der vorhergehenden Ansprüche,
**dadurch gekennzeichnet, dass**
das Reduktionmittel in eine Einspritzrichtung in den zweiten Teilkanal (32) einbringbar ist, wobei sich die Kanalbereiche (38, 54) jeweils entlang der Einspritzrichtung erweitern.

5. Abgasnachbehandlungseinrichtung nach Anspruch 4,
**dadurch gekennzeichnet, dass**
das Reduktionsmittel unter Ausbildung des Sprühkegels (24) entlang einer mit der Einspritzrichtung zusammenfallenden, gedachten Geraden (26) in den zweiten Teilkanal (32) einbringbar ist, wobei die Kanalbereiche (38, 54) jeweils koaxial zur Geraden (26) angeordnet sind.

6. Abgasnachbehandlungseinrichtung nach einem der vorhergehenden Ansprüche,
**dadurch gekennzeichnet, dass**
der erste Teilkanal (30) durch einen ersten Oberflächenbereich (62) des ersten Strömungsteilungselements (28) und einen dem ersten Oberflächenbereich (62) zugewandten ersten Teil (64) einer Innenseite (66) des Abgasführungselements (10) begrenzt ist, wobei der zweite Teilkanal (32) durch einen dem ersten Oberflächenbereich (62) abgewandten, zweiten Oberflächenbereich (68) des ersten Strömungsteilungselements (28) und einen dem zweiten Oberflächenbereich (68) zugewandten zweiten Teil (70) der Innenseite (66) des Abgasführungselements (10) begrenzt ist.

7. Abgasnachbehandlungseinrichtung nach Anspruch 6,
**dadurch gekennzeichnet, dass**
der erste Unterkanal (48) durch einen dritten Teil (72) des zweiten Oberflächenbereichs (68) des ersten Strömungsteilungselements (28) und einen dem dritten Teil (72) zugewandten dritten Oberflächenbereich (74) des zweiten Strömungsteilungselements (46) begrenzt ist, wobei der dritte Unterkanal (52) durch einen dem dritten Oberflächenbereich (74) abgewandten vierten Oberflächenbereich (76) des zweiten Strömungsteilungselements (46) und einen dem vierten Oberflächenbereich (76) zugewandten fünften Oberflächenbereich (78) des zweiten Strömungsteilungselements (46) begrenzt ist.

8. Abgasnachbehandlungseinrichtung nach Anspruch 7,
**dadurch gekennzeichnet, dass**
der zweite Unterkanal (50) durch einen dem fünften Oberflächenbereich (78) abgewandten, sechsten Oberflächenbereich (80) des zweiten Strömungsteilungselements (46) und einen dem sechsten Oberflächenbereich (80) zugewandten Teilbereich des zweiten Teils (70) der Innenseite (66) des Abgasführungselements (10) begrenzt ist.

9. Abgasnachbehandlungseinrichtung nach einem der vorhergehenden Ansprüche,
**dadurch gekennzeichnet, dass**
dem dritten Unterkanal (52) gerade Leitelemente (88) zum Leiten des Abgases zugeordnet sind.

10. Abgasnachbehandlungseinrichtung nach einem der vorhergehenden Ansprüche,
**dadurch gekennzeichnet, dass**
gebogene Leitelemente (90) zum Bewirken einer drallförmigen Strömung zumindest eines Teils des Abgases vorgesehen sind.

11. Abgasnachbehandlungseinrichtung nach einem der vorhergehenden Ansprüche,
**dadurch gekennzeichnet, dass**
zumindest eines der Strömungsteilungselemente (28, 46), insbesondere das erste Strömungsteilungselement (28), auf seiner Innenseite eine Kontur eines Diffusors (108) mit einem sich in Strömungsrichtung der jeweiligen Teilströmung oder Unterströmung verjüngenden ersten Längenbereich (110) und einen sich in Strömungsrichtung daran anschließenden und erweiternden zweiten Längenbereich (112) aufweist.

## Claims

1. Exhaust gas after-treatment device for an internal combustion engine of a motor vehicle, the device having at least one exhaust gas guide element (10) comprising at least one exhaust passage (12) through which exhaust gas of the internal combustion engine can flow, having a metering device (16), by means of which a reducing agent for denitrifying the exhaust gas can be introduced into the exhaust passage (12) at at least one feed point (18), and having a first flow dividing element (28), which is located in the exhaust passage (12) and by means of which the exhaust passage (12) can be divided into a first part-passage (30), through which a first part-flow of the exhaust gas can flow, and a second part-passage (32), through which a second part-flow of the exhaust gas can flow and in which the feed point (18) is located, wherein the a first flow dividing element (28) has a passage region (38), through which the second part-flow can flow and which widens in the flow direction of the second part-flow, wherein
a second flow dividing element (46), in which the feed point (18) is located, is located in the second part-passage (32),
**characterised in that**
the second part-passage (32) is divided by the second flow dividing element (46) into a first sub-passage (48), through which a first sub-flow of the exhaust gas can flow, a second sub-passage (50), through which a second sub-flow of the exhaust gas can flow, and a third sub-passage (52), through which a third sub-flow of the exhaust gas can flow and which is located between the first sub-passage (48) and the second sub-passage (50), wherein the second flow dividing element (46) has a second passage region (54), through which the second and the third sub-flows (84, 86) can flow and which is cylindrical or widens in the flow direction of the second and the third sub-flows (84, 86), and wherein the first passage region (38) of the first flow dividing element (28) widens along an injection direction of the reducing agent.

2. Exhaust gas after-treatment device according to claim 1,
**characterised in that**
the reducing agent can be introduced into the exhaust passage (12) by means of the metering device (16) while forming a spray cone (24) having a taper angle of at least 20 degrees, the flow dividing elements (28, 46) being located completely outside the spray cone (24).

3. Exhaust gas after-treatment device according to claim 1 or 2,
**characterised in that**
at least one part of the exhaust passage (12) through which the exhaust gas can flow is volute-shaped.

4. Exhaust gas after-treatment device according to any of the preceding claims,
**characterised in that**
the reducing agent can be introduced into the second part-passage (32) in an injection direction, each of the passage regions (38, 54) widening along the injection direction.

5. Exhaust gas after-treatment device according to claim 4,
**characterised in that**
the reducing agent can be introduced into the second part-passage (32) while forming the spray cone (24) along an imaginary straight line (26) coinciding with the injection direction, each of the passage regions (38, 54) being coaxial with the straight line (26).

6. Exhaust gas after-treatment device according to any of the preceding claims,
**characterised in that**
the first part-passage (30) is bounded by a first surface region (62) of the first flow dividing element (28) and a first part (64) - facing the first surface region (62) - of an inside (66) of the exhaust gas guide element (10), wherein the second part-passage (32) is bounded by a second surface region (68) - remote from the first surface region (62) - of the first flow dividing element (28) and a second part (70) - facing the second surface region (68) - of the inside (66) of the exhaust gas guide element (10).

7. Exhaust gas after-treatment device according to claim 6,
**characterised in that**
the first sub-passage (48) is bounded by a third part (72) of the second surface region (68) of the first flow dividing element (28) and a third surface region (74) - facing the third part (72) - of the second flow dividing element (46), wherein the third sub-passage (52) is bounded by a fourth surface region (76) - remote from the third surface region (74) - of the second flow dividing element (46) and a fifth surface region (78) - facing the fourth surface region (76) - of the second flow dividing element (46).

8. Exhaust gas after-treatment device according to claim 7,
**characterised in that**
the second sub-passage (50) is bounded by a sixth surface region (80) - remote from the fifth surface region (78) - of the second flow dividing element (46) and a part-region - facing the sixth surface region (80) - of the second part (70) of the inside (66) of the exhaust gas guide element (10).

9. Exhaust gas after-treatment device according to any of the preceding claims,
**characterised in that**
the third sub-passage (52) is assigned straight guide elements (88) for guiding the exhaust gas.

10. Exhaust gas after-treatment device according to any of the preceding claims,
**characterised in that**
curved guide elements (90) are provided to effect a swirl flow of at least a part of the exhaust gas.

11. Exhaust gas after-treatment device according to any of the preceding claims,
**characterised in that**
at least one of flow dividing elements (28, 46), in particular the first flow dividing element (28), has on its inside a contour of a diffuser (108) with a first length region (110) tapering in the flow direction of the respective part- or sub-flow and a second length region (112) adjoining the former in the flow direction and widening.

## Revendications

1. Système de post-traitement des gaz d'échappement pour un moteur à combustion interne d'un véhicule à moteur, comprenant au moins un élément de guidage des gaz d'échappement (10) qui présente au moins un canal de gaz d'échappement (12) dans lequel peuvent circuler les gaz d'échappement provenant du moteur à combustion interne, comprenant un système de dosage (16) au moyen duquel au niveau d'un point d'acheminement (18) peut être inséré un agent de réduction pour réduire les émissions d'oxydes azotes du gaz d'échappement dans le canal de gaz d'échappement (12), et comprenant un premier élément de séparation d'écoulement disposé dans le canal de gaz d'échappement (12) au moyen duquel le canal de gaz d'échappement est divisé en une première partie de canal (30) dans laquelle peut circuler un premier écoulement partiel de gaz d'échappement et une seconde partie de canal (32) dans laquelle peut circuler un second écoulement partiel de gaz d'échappement, où est disposé le point d'alimentation (18), le premier élément de séparation d'écoulement (28) présentant une zone de canal s'élargissant dans le sens du second écoulement partiel et dans laquelle circule le second écoulement partiel,
dans la seconde partie de canal (32) étant disposé un second élément de séparation d'écoulement (46) où est disposé le point d'alimentation (18), **caractérisé en ce que**
le second élément de séparation d'écoulement (46) de la seconde partie de canal (32) est divisé dans un premier canal secondaire dans lequel peut circuler un premier écoulement secondaire de gaz d'échappement, un deuxième canal secondaire (50) dans lequel peut circuler un deuxième écoulement secondaire (84) de gaz d'échappement, et un troisième canal secondaire (52) disposé entre le premier canal secondaire (48) et le deuxième canal secondaire (50), le second élément de séparation d'écoulement (46) présentant une seconde zone de canal (54) dans lequel peut circuler le deuxième et le troisième écoulement secondaire (84, 86) et s'élargissant ou étant cylindrique dans le sens de l'écoulement du deuxième et du troisième écoulement secondaire (84, 86) et la première zone de canal (38) du premier élément de séparation d'écoulement (28) s'élargissant dans le sens d'injection de l'agent de réduction.

2. Système de post-traitement des gaz d'échappement selon la revendication 1, **caractérisé en ce que** l'agent de réduction peut être introduit au moyen du système de dosage (16) par formation d'un cône d'injection (24), ledit cône d'injection s'élevant au moins à 20 degrés, les éléments de séparation d'écoulement (28, 46) étant disposés entièrement à l'extérieur du cône de pulvérisation (24).

3. Système de post-traitement des gaz d'échappement selon la revendication 1 ou la revendication 2, **caractérisé en ce qu'**au moins une partie du canal de gaz d'échappement (12) pouvant être traversé par le gaz d'échappement est en forme de volute.

4. Système de post-traitement des gaz d'échappement selon l'une quelconque des revendications précédentes, **caractérisé en ce que** l'agent de réduction peut être introduit dans un système d'injection dans la deuxième partie de canal (32), les zones de canal (38, 54) s'étendant respectivement le long du système d'injection.

5. Système de post-traitement des gaz d'échappement selon la revendication 4, **caractérisé en ce que** l'agent de réduction peut être introduit par la formation du cône d'injection (24) le long d'une droite (26) coïncidant avec le système d'injection dans la deuxième partie de canal (32), les zones de canal (38, 54) étant disposées respectivement coaxialement par rapport à la droite (26).

6. Système de post-traitement des gaz d'échappement selon l'une quelconque des revendications précédentes, **caractérisé en ce que** la première partie de canal (30) est limitée par une première zone de surface (62) du premier élément de séparation d'écoulement (28) et par une première partie (64) d'un côté intérieur (66) de l'élément de guidage de gaz d'échappement (10), orientée vers la première zone de surface (62), la seconde partie de canal (32) étant limitée par une seconde zone de surface (68) du premier élément de séparation d'écoulement (28) en regard de la première zone de surface (62) et par une seconde partie (70) du côté intérieur (66) de l'élément de guidage de gaz d'échappement (10) orientée vers la seconde zone de surface (68).

7. Système de post-traitement des gaz d'échappement selon la revendication 6, **caractérisé en ce que** le premier canal secondaire (48) est limité par une troisième partie (72) de la seconde zone de surface (68) du premier élément de séparation d'écoulement (28) et par une troisième zone de surface (74) du second élément de séparation d'écoulement (46) orientée vers la troisième partie (72), le troisième canal secondaire (52) est limité par une quatrième zone de surface (76) du second élément de séparation d'écoulement (46), orientée vers la troisième zone de surface (74) et par une cinquième zone de surface (78) du second élément de séparation d'écoulement (46), orientée vers la quatrième zone de surface (76).

8. Système de post-traitement des gaz d'échappement selon la revendication 7, **caractérisé en ce que** le second canal secondaire (50) est limité par une sixième zone de surface (80) du second élément de séparation d'écoulement (46), en regard de la cinquième zone de surface (78) et par une zone partielle de la seconde partie (70) du côté interne (66) de l'élément de guidage des gaz d'échappement (10), orientée vers la sixième zone de surface (80).

9. Système de post-traitement des gaz d'échappement selon l'une quelconque des revendications précédentes, **caractérisé en ce que** des éléments de guidage (88) droits sont associés au troisième canal secondaire (52) pour guider le gaz d'échappement.

10. Système de post-traitement des gaz d'échappement selon l'une quelconque des revendications précédentes, **caractérisé en ce que** des éléments de guidage courbés (90) servent à produire un écoulement en tourbillon d'au moins une partie du gaz d'échappement.

11. Système de post-traitement des gaz d'échappement selon l'une quelconque des revendications précédentes, **caractérisé en ce qu'**au moins l'un des éléments de séparation d'écoulement (28, 46), en particulier le premier élément de séparation d'écoulement (28), présente sur son côté intérieur un contour d'un diffuseur (108) comprenant une première zone longitudinale (110) se rétrécissant dans le sens de l'écoulement partiel respectif ou de l'écoulement secondaire et comprenant une seconde zone longitudinale s'élargissant dans le sens de l'écoulement et s'y raccordant.
